# EUROPEAN PATENT APPLICATION

(11) **EP 3 788 880 A1**
(43) Date of publication of application: **10.03.2021**
(21) Application number: 20382786.0
(22) Date of filing: 03.09.2020
(51) Int. Cl.: A22C 17/00, A23P 10/10

(54) **AUTOMATED MACHINE FOR PREPARING SKEWERS**

(30) Priority: 06.09.2019 ES 201930778
(71) Applicant: PERABEL CONSTRUCCIONES INOXIDABLES, S.L., 17459 Campllong (Girona) (ES)
(72) Inventor: PERA PEREZ, José Maria, 17459 Campllong (Girona) (ES)
(74) Representative: Plasseraud IP

(57) **Abstract**

An automated machine for preparing skewers which comprises an inlet (1) for introducing food; pipes (2) able to connect to a meat filling machine (3), the pipes (2) being for moving the food to the inlet (1); at least one first roller (4) for receiving food, which has longitudinal housings (8) to receive the food; dosing means (6) configured to supply sticks; at least one second roller (5) for receiving the sticks, which has longitudinal gaps (8) to receive the sticks; pusher means (17) to insert the sticks into the food available in the housings (8) forming skewers; and, extraction means to remove the skewers.

## Description

### Technical field

The present invention is related to machines for preparing skewers of food products, specifically meat skewers.

### State of the art

There is the traditional skewer preparation method consisting of the manual skewering of pieces of food on sticks, which is time consuming and laborious.

At present, machines are known for preparing food skewers, such as meat and vegetables, which comprise moulds in which the food is manually deposited and means for inserting sticks that pass through the food, forming the skewers.

There are machines where meat and/or vegetables are manually introduced into a large mould making layers and without chopping, this is introduced into the machine, which inserts a set of sticks and later, with cutting means using mould guides, the food is cut, configuring the different skewers. Finally, the mould is opened and the different skewers are manually removed. This entails having to manually prepare the filling and emptying of the moulds, managing to make different skewers at the same time, but without continuity, with the consequent loss of time and money.

Machines for semi-automatically preparing meat skewers are also known, which consist of a rotating table with different stations wherein the meat is manually introduced into a mould, when it reaches one of the stations, the machine introduces the stick to form the skewer, and at the next stop the formed skewer is manually removed, securing continuity in the preparation skewers but the speed being limited to the time of manual introduction of the food and the removal of the finished skewer, forcing a minimum of two operators to act on the machine.

Likewise, there are semi-automatic meat and/or vegetable skewer machines consisting of a structure wherein a conveyor belt is mobilised by means of which the moulds with the meat pieces that have been manually deposited are transported to where supports hold the mould and by means of a pusher, a stick is introduced into the central area of the meat piece resulting in obtaining a skewer, and subsequently at the end of the conveyor belt, expelling the skewer.

Patent document P200201316 shows the conveyor belt with moulds that are manually filled and at the end of the conveyor belt the skewers are expelled by gravity. It has the drawback that the pressure exerted on the food, together with the humidity thereof, makes it difficult for the skewer to be expelled only by gravity. Furthermore, this solution maintains the need for manual work in the assembly of the skewers.

In a European patent document, with application number 95932040, the tray is shown wherein the food is manually deposited and the extraction is done by mechanical means. The drawback of manual assembly of the skewers is maintained and the mechanical elements of the machine are increased to ensure extraction.

In view of the drawbacks described or limitations exhibited by the currently existing solutions, a solution is necessary that allows the food and the sticks to be automatically arranged in the moulds, these being well distributed without human means and extracting the skewers obtained in a simple and effective way.

### Object of the invention

In order to meet this objective and to avoid minimising labour to a minimum, the present invention provides an automated machine for preparing skewers, without the need for labour.

The automated machine for preparing skewers comprises an inlet for introducing food; pipes able to connect to a meat filling machine, the pipes being for moving the food to the inlet; at least one first roller for receiving food, which has longitudinal housings to receive the food; dosing means configured to supply sticks; at least one second roller for receiving the sticks, which has longitudinal gaps to receive the sticks; pusher means to insert the sticks into the food available in the housings forming skewers; and, extraction means to remove the skewers.

In this way the skewers are obtained without the participation of operators to arrange the food, or to insert the sticks into said food, and also in a continuous manner.

Preferably, the first roller and the second roller are arranged axially aligned with each other and on the same axis to rotate simultaneously.

The machine preferably comprises a first plate between the first roller and the second roller, the first plate having recesses for guiding the sticks as they are moved by the pusher means.

The machine preferably comprises a platen with at least one curved wall, the at least one curved wall being arranged to delimit the housings.

Preferably, the first roller has the housings defined by a base and two longitudinal walls, which together with the first plate and the platen, define a mould for food.

The machine preferably comprises a second plate and an actuator element between the inlet and the housings, the second plate being movable by means of the actuator element to enable opening and closing of the food inlet.

Preferably, the second plate has edges, the edges being sharp to cut food when the first roller is rotated.

The extraction means preferably comprise a wedge arranged to move the housed sticks in correspondence with the housings by means of contact, such that the skewers are removed from the housings.

The pusher means preferably comprise an actuator member which has a needle at one end to come into contact with one of the sticks, the needle being axially aligned with one of the gaps of the second roller. Preferably, the inlet is axially aligned with the needle of the actuator member.

### Description of the figures

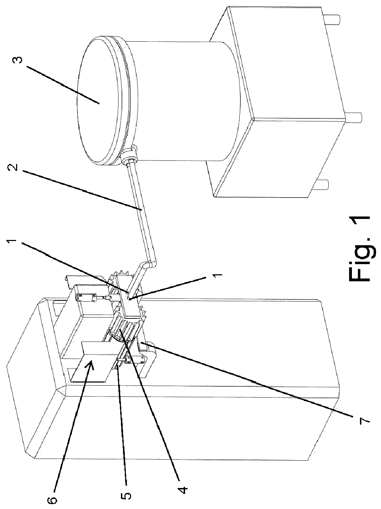

Figure 1 shows an overall view of an automated machine for preparing skewers object of the invention connected to a filling machine.

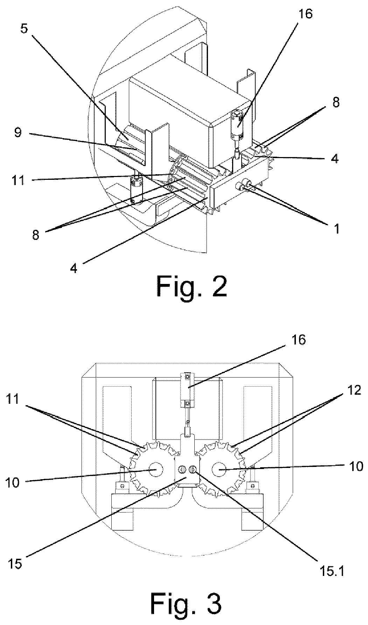

Figure 2 shows a detail of a food inlet comprised in the machine object of the invention.
Figure 3 shows a front view of the food inlet of the machine object of the invention.

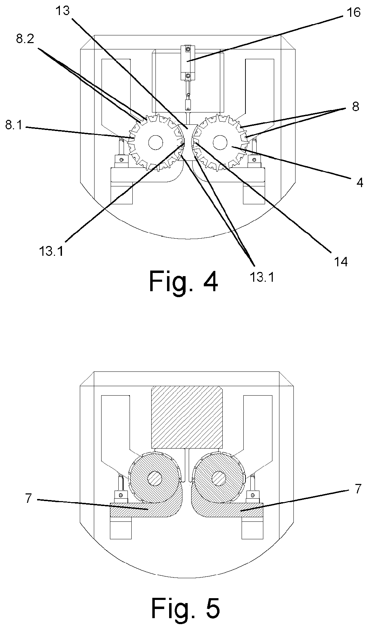

Figure 4 shows a front view of first food receiving rollers.
Figure 5 shows a front view of second stick receiving rollers and an extractor wedge for the skewers.

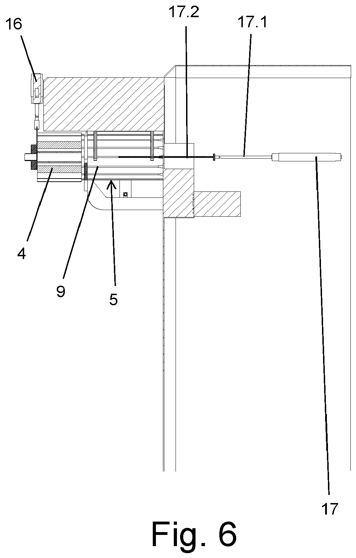

Figure 6 shows a lateral cross-sectional view of the machine object of the invention.

### Detailed description of the invention

The present invention relates to an automated machine for preparing skewers, which comprises a food inlet (1) through which the food, such as pieces of meat, is introduced by means of conduits or pipes (2) able to connect to a filling machine (3). The pipes (2) and the filling machine (3) are not the object of the present invention.

The automated machine for preparing skewers additionally comprises at least one first roller (4), and preferably at least two, for receiving the food that will form the skewers and a second roller (5), and preferably at least two, for receiving the sticks that will form the skewers. The first roller (4) has longitudinal housings (8) to receive the food. The second roller (5) has longitudinal gaps (9) to receive the sticks.

The present machine additionally comprises dosing means (6) configured and arranged to store and supply sticks for the formation of the skewers.

The first roller (4) and the second roller (5) are arranged together in such a way that, by means of pusher means (17) comprised in the present machine, the sticks can be inserted into the food located in the housings (8) in such a way that skewers are formed.

Accordingly, the pusher means (17) are preferably configured to push the sticks by means of a linear movement, the sticks being linearly moved in an axial direction thereof.

Preferably, the machine object of the invention additionally comprises extraction means arranged for removing or extracting the skewers, once formed, with respect to the first roller (4), and more specifically to the housings (8).

The first food receiving roller (4) and the second stick receiving roller (5) are preferably aligned with each other. Additionally or alternatively, said rollers (4, 5) are arranged such that they rotate in a synchronised way with each other on the same axis (10) driven by a motor, for example an electric motor.

Between the first food receiving roller (4) and the second stick receiving roller (5), a first plate (11) with recesses, or notches, is arranged for guiding the sticks in the movement thereof to the first roller (4), and more specifically to the housings (8), from the second roller (5), and more specifically from the gaps (9). This guided movement of each one of the sticks is determined in such a way that they are partially inserted or introduced into the food arranged in said housings (8).

Additionally, this first plate (11) is arranged in such a way that it seals an end or longitudinally end portion of the housings (8), thus acting as a stop for the food as it is arranged coming from the inlet (1). In this way, it is prevented that the pressure exerted on the food causes it to come out of the housings (8).

The machine object of the invention preferably comprises a platen (13) which has at least one curved wall (13.1). This curved wall (13.1), preferably concave in shape, is arranged and configured to adapt to the first food receiving roller (4) and to achieve in this way, the closure of the space intended for food in the housings (8) in a radial direction thereof.

The first food receiving roller (4) has the housings (8), said housings (8) being defined by a base (8.1) and two longitudinal walls (8.2), and which together with the first plate (11) and the platen (13) define a mould for food.

Between the inlet (1) and the housings (8) for the food, the machine comprises a second plate (15) and an actuator element (16) for opening and closing the food inlet (1). This opening and closing is carried out by moving the second plate (15) perpendicularly, or transversally, to the food inlet (1) by means of the actuator element (16).

This second plate (15) has at least one through hole (15.1) through which the food passes as it is moved from the inlet (1) to the housings (8). Likewise, this through hole (15.1) has a sharp edge, at one end located in correspondence with the first roller (4), to cut the food as the first roller (4) is rotated, by way of a guillotine.

Additionally, the second plate (15) is to be arranged in such a way that it acts as a stop for the sticks that are inserted into the food, thus ensuring that the sticks do not protrude therefrom at an opposite end to that of the insertion of the sticks. This stop function is performed with the second plate (15) determining the closure of the food inlet (1).

The means for extracting the skewers comprise a wedge (7), which is preferably arranged immediately below the food inlet (1). The wedge (7) is arranged such that it forces, by contact, the stick of the corresponding skewer to separate from the first roller (4) causing a removal or ejection of said skewer from the corresponding housing (8).

This wedge (7) is fixed and, by means of a groove preferably located between the first roller (4) and the second roller (5), and more specifically between the first plate (11) and the second roller (5), it ensures contact against the stick at least partially arranged in the corresponding housing (8) until the entire skewer is ejected.

The pusher means (17) comprise an actuator member (17.1), preferably a pneumatic or hydraulic driving shaft. This actuator member (17.1) preferably has a needle (17.2) at one end, adjustable in length such that it is able to adapt to different stick lengths. Additionally or alternatively, to achieve this same effect, the pusher means (17) are configured to modify the path of the needle (17.2) in terms of the extension thereof.

The needle (17.2) of the actuator member (17.1) can be driven such that it comes into contact with one of the sticks, the needle (17.2) being axially aligned with one of the gaps (9) of the second stick receiving roller (5). Preferably, the needle (17.2) is further axially aligned with the food inlet (1).

According to what has been described, the automated preparation of the skewers is obtained effectively and from beginning to end.

## Claims

1. An automated machine for preparing skewers, **characterised in that** it comprises:
• an inlet (1) for introducing food;
• pipes (2) able to connect to a meat filling machine (3), the pipes (2) being for moving the food to the inlet (1);
• at least one first roller (4) for receiving the food, which has longitudinal housings (8) to receive the food;
• dosing means (6) configured to supply sticks;
• at least one second roller (5) for receiving the sticks, which has longitudinal gaps (8) to receive the sticks;
• pusher means (17) to insert the sticks into the food available in the housings (8) forming skewers;
• extraction means to remove the skewers.

2. The machine according to claim 1, **characterised in that** the first roller (4) and the second roller (5) are arranged axially aligned with each other and on the same axis (10) to rotate simultaneously.

3. The machine according to claim 1 or 2, **characterised in that** it comprises a first plate (11) between the first roller (4) and the second roller (5), the first plate (11) having recesses (12) for guiding the sticks when being moved by the pusher means (17).

4. The machine according to any one of the preceding claims, **characterised in that** it comprises a platen (13) with at least one curved wall (13.1), the at least one curved wall (13.1) being arranged to delimit the housings (8).

5. The machine according to claims 3 and 4, **characterised in that** the first roller (4) has the housings (8) defined by a base (8.1) and two longitudinal walls (8.2), which together with the first plate (11) and the platen (13) define a mould (14) for the food.

6. The machine according to any one of the preceding claims, **characterised in that** it comprises a second plate (15) and an actuator element (16) between the inlet (1) and the housings (8), the second plate (15) being movable by means of the actuator element (16) to enable opening and closing of the food inlet (1).

7. The machine according to claim 6, **characterised in that** the second plate (15) has edges, the edges being sharp to cut the food when the first roller (4) is rotated.

8. The machine according to any one of the preceding claims, **characterised in that** the extraction means comprise a wedge (7) arranged to move the housed sticks in correspondence with the housings (8) by means of contact, such that the skewers are removed from the housings (8).

9. The machine for preparing skewers according to any one of the preceding claims, **characterised in that** the pusher means (17) comprise an actuator member (17.1) which has a needle (17.2) at one end to come into contact with one of the sticks, the needle being (17.2) axially aligned with one of the gaps (9) of the second roller (5).

10. The machine for preparing skewers according to claim 9, **characterised in that** the inlet (1) is axially aligned with the needle (17.2) of the actuator member (17.1).
